# EUROPÄISCHE PATENTANMELDUNG

(11) **EP 4 699 911 A1**
(43) Veröffentlichungstag der Anmeldung: **25.02.2026**
(21) Anmeldenummer: 25196569.5
(22) Anmeldetag: 19.08.2025
(51) Int. Cl.: B62D 27/06

(54) **BEFESTIGUNGSSYSTEM**

(30) Priorität: 20.08.2024 DE 102024123711
(71) Anmelder: Zoeller Tech Sp. z.o.o., 84-123 Rekowo Górne (PL)
(72) Erfinder: Kreft, Grzegorz, 84-230 Rumia (PL); Madro, Krzysztof, 80-176 Gdansk (PL)
(74) Vertreter: Regler, Markus Egid

(57) **Zusammenfassung**

Die Erfindung betrifft ein Befestigungssystem zum Anbringen von Anbauteilen an einem Aufbau (1) eines Nutzfahrzeuges mit einem langgestreckten, einstückigen, materialeinheitlichen Blechprofil (3) mit einer in Erstreckungsrichtung verlaufenden Einbuchtung (5) und zumindest einem in der Einbuchtung (5) in Richtung einer Öffnung (6) der Einbuchtung (5) formschlüssig anbringbarem und in Erstreckungsrichtung verschieblichen Anbindungselement (4).

Das ermöglicht eine beliebige Positionierung von Anbauteilen, Variabilität für unterschiedlich große, insbesondere unterschiedlich lange, weil beliebig lang ausgestaltete Profile verwendet werden können. Das reduziert Produktions- und Lageraufwand.

## Beschreibung

Die Erfindung betrifft ein Befestigungssystem zum Anbringen von Anbauteilen an einem Aufbau eines Nutzfahrzeuges mit den Merkmalen von Patentanspruch 1.

Nutzfahrzeuge sind mit unterschiedlichen Arten von Aufbauten ausgestattet, die auf einem Chassis montiert werden. Bei Abfallsammelfahrzeuge beispielsweise umfasst der Aufbau in der Regel einen Sammelcontainer und eine Hub-Kipp- oder Kipp-Vorrichtung, um einen Abfallbehälter in den Sammelcontainer zu entleeren.

An dem Aufbau werden unterschiedliche Anbauteile montiert. Dazu gehören beispielsweise Lampen, Scheinwerfer, Unterfahrschutz, Aufbewahrungsboxen und dergleichen. Die genaue Position der Anbauteile in Fahrzeuglängsrichtung hängt dabei von den Dimensionen des Aufbaus, insbesondere von dessen Länge ab.

Für die Montage ist es üblich, die Aufbauten mit Blechprofilen zu versehen, an denen Verbindungsmittel an den vorgesehenen Positionen für die Anbauteile vorgesehen sind. Dabei müssen für unterschiedlich lange Aufbauten entsprechend angepasste Blechprofile vorgesehen werden, um die Anbauteile richtig zu positionieren. Außerdem sind oftmals Kundenwünsche zu berücksichtigen, die die Anbringung konkreter Anbauteile erfordern, die zusätzliche Verbindungsmittel notwendig machen. Das führt zu einem hohen Fertigungs- und Lageraufwand, da unterschiedliche Profile vorgehalten oder sogar individuell gefertigt werden müssen.

Es ist die Aufgabe der vorliegenden Erfindung, diese Nachteile zu überwinden.

Die Erfindung betrifft ein Befestigungssystem zum Anbringen von Anbauteilen an einem Aufbau eines Nutzfahrzeuges mit einem langgestreckten, einstückigen, materialeinheitlichen Blechprofil mit einer in Erstreckungsrichtung verlaufenden Einbuchtung und zumindest einem in der Einbuchtung in Richtung einer Öffnung der Einbuchtung formschlüssig anbringbarem und in Erstreckungsrichtung verschieblichen Anbindungselement. Damit ist gemeint, dass der Formschluss in Richtung zur Öffnung hin wirkt, also senkrecht zur Erstreckungsrichtung. Damit kann das Anbindungselement an einer beliebigen Position in Erstreckungsrichtung des Blechprofils angeordnet werden. Man ist nicht auf vorab festgelegte Positionen beschränkt. Vielmehr kann das Blechprofil angepasst auf die Länge des jeweiligen Aufbaus abgelängt und verwendet werden. Damit müssen nicht Blechprofile mit unterschiedlichen Längen vorgehalten werden, sondern sie können unmittelbar passend zum jeweiligen Fahrzeug produziert werden. Gleichermaßen können unterschiedliche Anbauteile an flexiblen Positionen vorgesehen werden. Dabei können auch Kundenwünsche individuell berücksichtigt werden.

Bevorzugt handelt es sich bei dem Blechprofil um ein offenes Profil.

Bei der Erstreckungsrichtung handelt es sich im Normalfall um die Fahrzeuglängsachse, eine Anbringung des Blechprofils in Fahrzeugquerrichtung ist aber ebenso möglich.

Vorzugsweise handelt es sich bei den Aufbauten um Sammelcontainer für Abfallsammelfahrzeuge, die bedarfsgemäß mit verschiedenen Sammelvolumina und damit verschiedenen Längen und Höhen angeboten werden. Die Blechprofile können an die jeweilige Länge angepasst werden und die Anbindungselemente passend positioniert werden.

Die Anbindungselemente sind so ausgestaltet, dass sie in Erstreckungsrichtung des Blechprofils in der Einbuchtung frei bewegbar sind und/oder dass sie an einer beliebigen Position in Erstreckungsrichtung des Blechprofils in die Einbuchtung eingebracht werden können.

Gleichzeitig sind die Anbindungselemente so ausgestaltet, dass sie bezogen auf die Richtung zur Öffnung der Einbuchtung mit dem Blechprofil einen Formschluss bilden können. Es wird in diese Richtung ein Hinterschnitt generiert. Dieser Formschluss entsteht bevorzugt, indem ein Anbindungselement in entsprechender Weise endseitig in die Einbuchtung des Blechprofils eingeführt wird oder indem das Anbindungselement an einer beliebigen Position in Öffnung der Einbuchtung eingebracht und dann gedreht wird.

Die Anbindungselemente sind bevorzugt aus einem metallischen Material gefertigt. Vorzugsweise sind die Anbindungselemente als Gleichteile ausgestattet, um die Produktion effizient zu gestalten. Es können mehrere Anbindungselemente verwendet werden, um ein Anbauteil zu befestigen.

Das Blechprofil besteht bevorzugt aus einem metallischen Material, das biegetechnisch oder rollformtechnisch zu dem Blechprofil geformt wird. Bei der biegetechnischen Produktion wird eine einstückige Platine in passender Dimension von einem Coil abgelängt und in die passende Form gebogen. Beim Rollformen wird das Material ebenfalls von einem Coil abgezogen, rollgeformt und dann auf die passende Länge zugeschnitten.

Unter einem Anbauteil wird im Rahmen der Erfindung einerseits eine Komponente verstanden, die unmittelbar mit zumindest einem Anbindungselement verbunden wird. Es kann sich dabei aber auch um eine mehrteilige Komponente handeln, deren Einzelteile nur mittelbar mit zumindest einem Anbindungselement verbunden sind. Es ist auch möglich, dass Anbauteile über ein Zwischenelement mittelbar mit zumindest einem Anbindungselement verbunden sind.

In einer bevorzugten Ausführungsform der Erfindung ist das langgestreckte Blechprofil mit seinen quer zur Erstreckungsrichtung freien Enden mit dem Aufbau verbunden. Es handelt sich dann um ein offenes Profil, dessen Querschnitt in Erstreckungsrichtung betrachtet über freie Enden verfügt. Diese werden mit dem Aufbau verbunden. Das kann schweißtechnisch, klebetechnisch, schraubtechnisch oder auf andere geeignete Weise erfolgen. Vorteilhaft ist hier die einfache Anbringung des Profils und die Reduzierung von Gewicht.

Weiterhin ist bevorzugt vorgesehen, dass das langgestreckte Blechprofil einen ersten Abschnitt aufweist, dessen freies Ende mit einer Seitenwand des Aufbaus verbunden ist, und einen zweiten Abschnitt aufweist, dessen freies Ende mit einer Unterseite des Aufbaus verbunden ist, wobei die Einbuchtung in dem zweiten Abschnitt ausgebildet ist. Das bedeutet, dass das Blechprofil am unteren Ende des Aufbaus angeordnet ist, wo die meisten Anbauteile befestigt werden müssen. Das Profil ist in zwei Abschnitte unterteilt. In dem zweiten Abschnitt ist die Einbuchtung vorgesehen, in der die Anbindungselemente angeordnet sind. Die Einbuchtung muss im zusammengebauten Zustand so positioniert werden, dass die Anbauteile richtig ausgerichtet sind. Der erste Abschnitt kann auf den jeweiligen Anwendungsfall passend ausgestaltet werden, so dass der zweite Abschnitt mit der Einbuchtung stets im Wesentlichen zur Fahrzeugaufstandsfläche weisend angeordnet ist.

Mit dem freien Ende kann eine Kante des Blechprofils gemeint sein, etwa bei einer schweißtechnischen Verbindung. Es kann sich auch um einen Endbereich handeln, etwa wenn eine schraubtechnische Verbindung vorgesehen ist.

Weiterhin bevorzugt weist die Einbuchtung einen im Wesentlichen trapezförmigen Querschnitt auf mit einer der Öffnung gegenüberliegenden Bodenfläche und zwei in Richtung der Öffnung aufeinander zustrebenden Seitenflächen. Dadurch wird innerhalb der Einbuchtung in Richtung der Öffnung betrachtet ein Hinterschnitt gebildet, der den Formschluss mit dem Anbindungselement ermöglicht.

Besonders bevorzugt weist in Einbaulage die Bodenfläche im Wesentlichen zum Aufbau und die Öffnung im Wesentlichen zur Fahrzeugaufstandsfläche. Durch diese Anordnung wird die Montage von Anbauteilen vereinfacht, da das Anbindungselement bedingt durch die Schwerkraft und den Formschluss an seiner Position in der Einbuchtung des Blechprofils gehalten wird.

Eine weitere vorteilhafte Ausgestaltung der Erfindung sieht vor, dass das Anbindungselement einen Anbindungsabschnitt mit zumindest einem Schraubloch und zwei davon in einem Winkel α abstehende Seitenschwingen aufweist, so dass die Seitenschwingen im Bereich der Öffnung mit den Seitenflächen der Einbuchtung in Anlage kommen, so dass das Anbindungselement in Richtung der Öffnung formschlüssig gehalten ist. Die Verbindung zwischen dem Anbindungselement und einem Anbauteil erfolgt hier schraubtechnisch. Dazu ist in einem Anbindungsabschnitt zumindest ein Schraubloch vorgesehen. Auch wenn eine Gleichteilfertigung bevorzugt wird, kann das Lochbild problemlos auf das jeweilige Anbauteil angepasst werden.

Der Anbindungsabschnitt ist flach gestaltet, um eine optimale Anbindung zu dem Anbauteil zu ermöglichen. Von ihm stehen Seitenschwingen in einem vorgesehenen Winkel α ab, die in Einbaulage mit den Seitenflächen der Einbuchtung in Anlage kommen. Das bedeutet, dass der konkrete Winkel α von der Ausgestaltung der Einbuchtung, insbesondere der Winkelstellung der Seitenflächen relativ zur Bodenfläche abhängt und darauf angepasst sein muss. In Einbaulage ist das Anbindungselement hinterschnittig in der Einbuchtung angeordnet und bildet einen Formschluss in Richtung zur Öffnung der Einbuchtung hin aus. Vorteilhafterweise wird das Anbauteil damit in einfacher Weise und lösbar und flexibel an dem Blechprofil festgelegt.

Bevorzugt ist die Breite des Anbindungsabschnitts kleiner als die Breite der Öffnung senkrecht zur Erstreckungsrichtung. Dann kann das Anbindungselement mit seiner Längsrichtung parallel zur Erstreckungsrichtung in die Einbuchtung eingebracht werden.

Vorzugsweise ist der Abstand der Seitenflächen der Einbuchtung im Bereich der Bodenfläche größer als der Abstand der Seitenschwingen des Anbindungselements. Dadurch wird eine gute Beweglichkeit des Anbindungselements bei der Montage ermöglicht. Insbesondere ist das Anbindungselement innerhalb der Einbuchtung dann drehbar, so dass es an beliebiger Stelle des Blechprofils eingeführt werden kann und dann durch eine Drehung um neunzig Grad einen Hinterschnitt herzustellen.

Eine weitere vorteilhafte Ausgestaltung der Erfindung sieht vor, dass Anbauteile schraubtechnisch an dem Anbindungselement anbringbar sind, wodurch das Anbindungselement unverschieblich in dem langgestreckten Blechprofil gehalten ist. Durch das Verschrauben wird nicht nur das Anbauteil an dem Anbindungselement und damit an dem Aufbau befestigt, sondern auch das Anbindungselement in der Einbuchtung unverschieblich gehalten, indem das Anbindungselement gegen das Blechprofil gepresst wird, mithin ein Reibschluss in Erstreckungsrichtung gebildet wird. Damit wird die Montage vereinfacht, weil ein zusätzlicher Arbeitsschritt, um das Anbindungselement am vorgesehenen Ort zu befestigen entfällt. Gleichzeitig ermöglicht diese Vorgehensweise bei Bedarf ein einfaches Lösen und Umpositionieren der Anbauteile. Die Verschraubung wird gelöst, die Schrauben werden aber nicht vollständig entfernt. Das Anbauteil kann zusammen mit dem Anbindungselement in der Einbuchtung des Blechprofils verschoben werden und an der neuen Position wieder fixiert werden.

Weiterhin ist erfindungsgemäß vorgesehen, dass an dem langgestreckten Blechprofil benachbart zu der Öffnung der Einbuchtung Anlageflächen für Anbauteile ausgebildet sind. Damit werden die Anbauteile an dem Blechprofil abgestützt und es wird eine stabile dauerhafte Verbindung erhalten.

Weitere Merkmale der Erfindung ergeben sich aus den Figuren und der zugehörigen Beschreibung es zeigen:
- Figur 1: den Aufbau eines Nutzfahrzeugs in perspektivischer Ansicht,
- Figur 2: einen Ausschnitt des Aufbaus mit einem erfindungsgemäßen Befestigungssystem,
- Figur 3: eine Querschnittsdarstellung eines erfindungsgemäßen Befestigungssystems,
- Figur 4: eine Detaildarstellung von Figur 3,
- Figur 5: eine erste Variante eines Anbindungselements,
- Figur 6: eine zweite Variante eines Anbindungselements,
- Figur 7: den Aufbau eines Nutzfahrzeugs in perspektivischer Ansicht mit einem Anbauteil,
- Figur 8: einen Ausschnitt des Aufbaus mit einem erfindungsgemäßen Befestigungssystem mit einem Anbauteil,
- Figur 9: eine Querschnittsdarstellung eines erfindungsgemäßen Befestigungssystems mit einem Anbauteil,
- Figur 10: eine Querschnittsdarstellung eines erfindungsgemäßen Befestigungssystems mit einem Anbauteil.

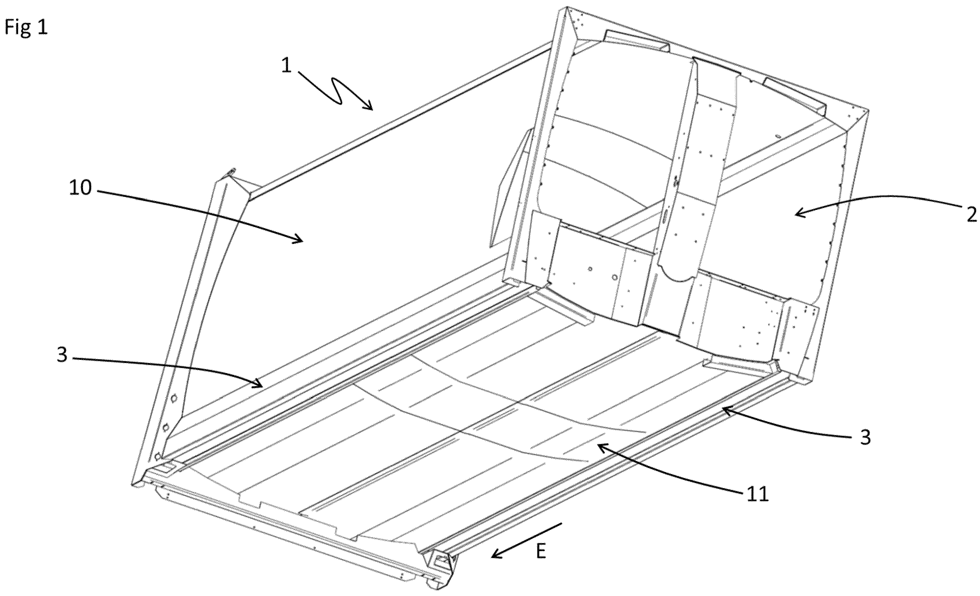

Die Figur 1 zeigt einen Aufbau 1 eines nicht näher dargestellten Nutzfahrzeugs. Dabei handelt es sich um den Sammelcontainer eines Abfallsammelfahrzeugs. Der Abfall wird manuell oder mittels einer Hub-Kipp- oder Kipp-Vorrichtung durch eine Einfüllöffnung 2 in das Innere des Sammelcontainers befördert. An den unteren Längskanten des Aufbaus 1 ist jeweils ein langgestrecktes, einstückiges, materialeinheitliches Blechprofil 3 angeordnet. Dieses erstreckt sich ein Erstreckungsrichtung E, die der Fahrzeuglängsachse entspricht. Das Blechprofil 3 bildet zusammen mit einem Anbindungselement 4 ein erfindungsgemäßes Befestigungssystem zum Anbringen von Anbauteilen an einem Aufbau 1 eines Nutzfahrzeuges.

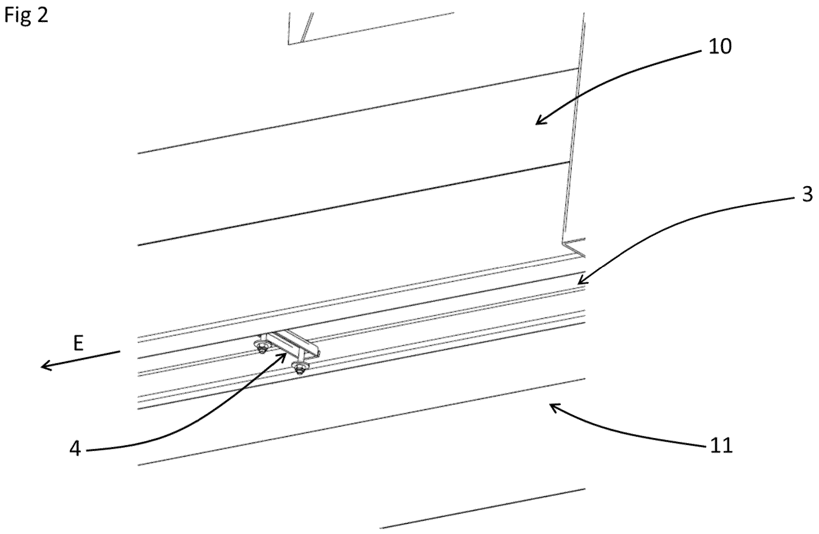

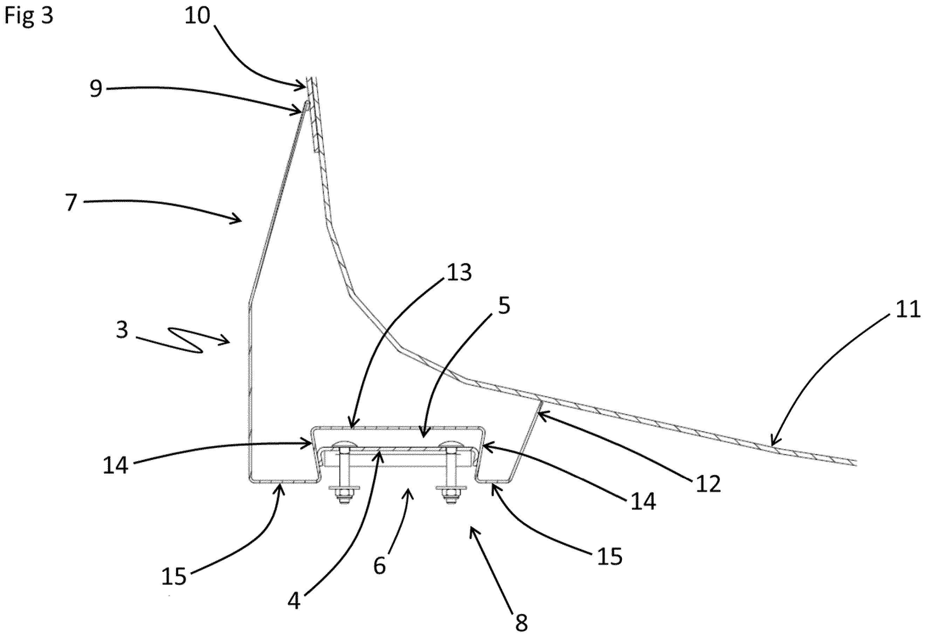

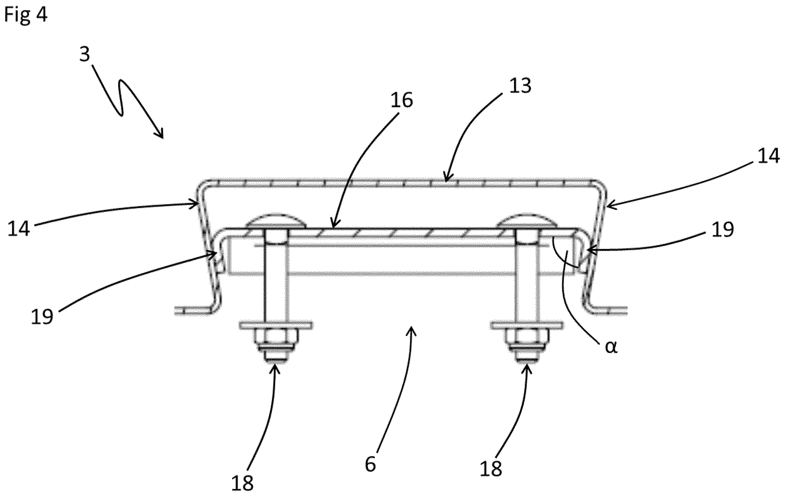

In der Figur 2 ist zu erkennen, wie ein Anbindungselement 4 in einer Einbuchtung 5 des Blechprofils 3 angeordnet ist. Die Einbuchtung 5 verläuft in Erstreckungsrichtung E. Die Anordnung des Anbindungselements 4 in der Einbuchtung 5 ist in den Querschnittsdarstellungen in Figur 3 und der Detaildarstellung daraus Figur 4 genauer zu entnehmen. Das Anbindungselement 4 kann ein der Einbuchtung 5 in Erstreckungsrichtung E verschoben werden und in Richtung der Öffnung 6 der Einbuchtung 5 formschlüssig angebracht werden.

Das Blechprofil 3 ist ein offenes Profil, das biegetechnisch oder rollformtechnisch hergestellt wird. Es weist einen ersten Abschnitt 7 und einen zweiten Abschnitt 8 auf, die miteinander einstückig, materialeinheitlich verbunden sind. Das freie Ende 9 des ersten Abschnitts 7 ist schweißtechnisch mit einer Seitenwand 10 des Aufbaus 1 verbunden von der Seitenwand 10 aus erstreckt sich der erste Abschnitt 7 hin zur Fahrzeugaufstandsfläche nach unten.

Der zweite Abschnitt 8 ist in diesem Ausführungsbeispiel in einem rechten Winkel abgewinkelt von dem ersten Abschnitt 7 und erstreckt sich von diesem hin zu der Unterseite 11 des Aufbaus 1. Das freie Ende 12 des zweiten Abschnitts 8 ist schweißtechnisch mit der Unterseite des Aufbaus 1 verbunden. In dem zweiten Abschnitt 8 ist die Einbuchtung 5 ausgebildet. Die Ausgestaltung des ersten Abschnitts 7 und des zweiten Abschnitts 8 sowie deren relative Lage zueinander ist abhängig vom jeweiligen Anwendungsfall.

Die Einbuchtung 5 weist einen im Wesentlichen trapezförmigen Querschnitt auf mit einer der Öffnung 6 gegenüberliegenden Bodenfläche 13 und zwei in Richtung der Öffnung 6 aufeinander zustrebende Seitenflächen 14. Vorzugsweise ist das Trapez symmetrisch ausgeführt, das heißt, die Seitenflächen 14 sind von der Bodenfläche 13 in jeweils gleichem Winkel abstehend. In Querrichtung des Blechprofils 3 betrachtet, ist die Bodenfläche 13 größer als die Öffnung 6. Die Öffnung 6 weist hier zur Fahrzeugaufstandsfläche hin, während die Bodenfläche 13 zum Aufbau 1 hinweist.

Benachbart zu der Öffnung 6 sind in dem zweiten Abschnitt 8 Anlageflächen 15 ausgebildet, mit denen ein Anbauteil im Einbauzustand in Anlage kommen kann.

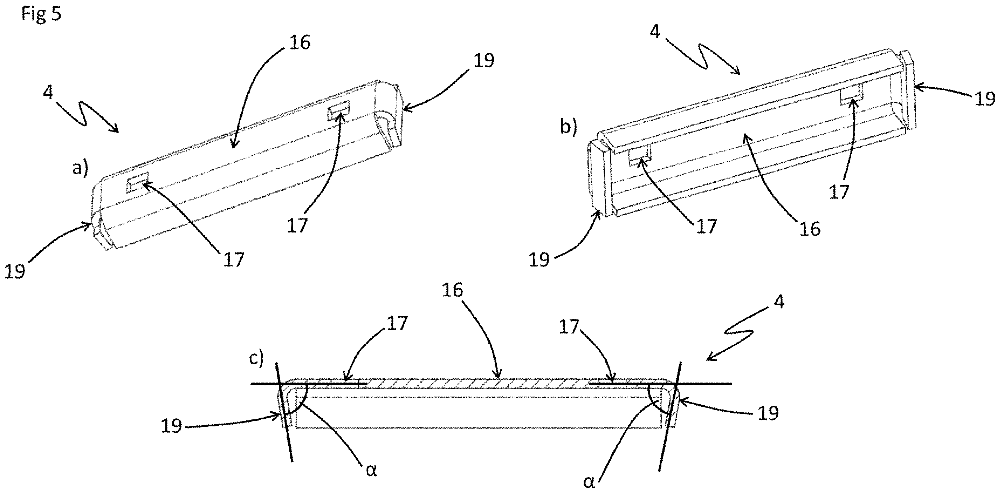

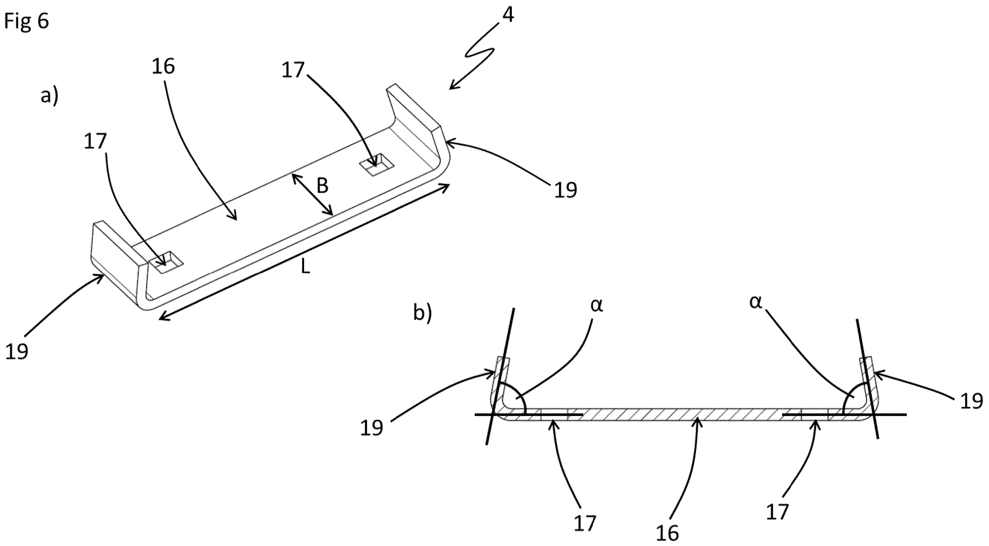

In der Einbuchtung 5 ist ein Anbindungselement 4 angeordnet, wie es in Figur 5 im Detail dargestellt ist. Eine alternative Ausführungsform ist in Figur 6 gezeigt. Beiden gemein ist ein Anbindungsabschnitt 16 mit jeweils zwei Schraublöchern 17 zum Anbringen eines Anbauteils mittels Schrauben 18. Von dem Anbindungsabschnitt 16 stehen in einem Winkel α zwei Seitenschwingen 19 ab. Ist das Anbindungselement 4 in Einbaulage quer zu der Einbuchtung 5 ausgerichtet, so kommen die Seitenschwingen 19 mit den Seitenflächen 14 der Einbuchtung 5 in Anlage. Der Winkel α ist entsprechend gewählt, dass die Seitenschwingen 19 mit den Seitenflächen 14 insbesondere im Bereich der Öffnung 6 in Anlage kommen. Dabei muss das Anbindungselement 4 nicht symmetrisch ausgestaltet sein, wenn die Einbuchtung 5 ebenfalls nicht symmetrisch ist. Die Seitenschwingen 19 können daher auch in unterschiedlichen Winkeln α, α' von dem Anbindungsabschnitt 16 abstehen.

In Figur 4 ist zu erkennen wie die Seitenschwingen 19 an den Seitenwänden 14 anliegen, so dass zur Öffnung 6 hin ein Formschluss gebildet wird. Bei einer Kraftwirkung in Richtung der Öffnung 6 kann das Anbindungselement 4 nicht aus der Einbuchtung 5 rutschen. Gleichzeitig wird beim Verschrauben eines Anbauteils an dem Anbindungselement 4 an den Seitenflächen 14 der Einbuchtung 5 festgezogen, so dass das Anbindungselement 4 auch in Erstreckungsrichtung E unverschieblich in der Einbuchtung 5 beziehungsweise in dem Blechprofil 4 gehalten ist.

Die Breite B des Anbindungsabschnitts 16 des Anbindungselements 4 ist deutlich kleiner als die Öffnung 6 in Querrichtung des Blechprofils 3 betrachtet, sprich: kleiner als der Abstand der Seitenflächen 14 im Bereich der Öffnung 6. Somit kann des Anbindungselement um neunzig Grad gedreht, so dass die Seitenschwingen 19 in Erstreckungsrichtung E zeigen, in die Öffnung 6 eingeführt werden. Das kann an jeder beliebigen Längsposition des Blechprofils 3 erfolgen. Im Bereich der Bodenfläche 13 ist der Abstand der Seitenflächen 14 größer als der Abstand L der Seitenschwingen 19 des Anbindungselements 4. Daher kann das Anbindungselement 4 dort in Einbaulage gedreht werden. Damit kann das Anbindungselement 4 an jeder gewünschten Position entlang des Blechprofils 3 festgelegt werden. Somit können stets gleich ausgestaltete Blechprofile 3 in unterschiedlichen Längen für unterschiedliche Aufbauten von Nutzfahrzeugen genutzt werden. Die technisch oder wegen Kundenwünschen erforderlichen Anbauteile können durch des erfindungsgemäße Befestigungssystem nach Bedarf positioniert werden, da die Anbindungselemente 4 entlang der Blechprofile 3 beliebig verschoben werden können.

Das Anbauteil wird mittels Schrauben an dem Anbindungselement 4 befestigt. Beim Anziehen der Schrauben 18 wird das Anbindungselement 4 in der Einbuchtung 3 gegen deren Seitenflächen 14 gepresst und so unverschieblich in der Einbuchtung gehalten. Das Lochbild der Schraublöcher 17 kann an ein konkretes Anbauteil angepasst werden. Es können auch mehrere Anbindungselemente 4 verwendet werden, um ein Anbauteil zu befestigen.

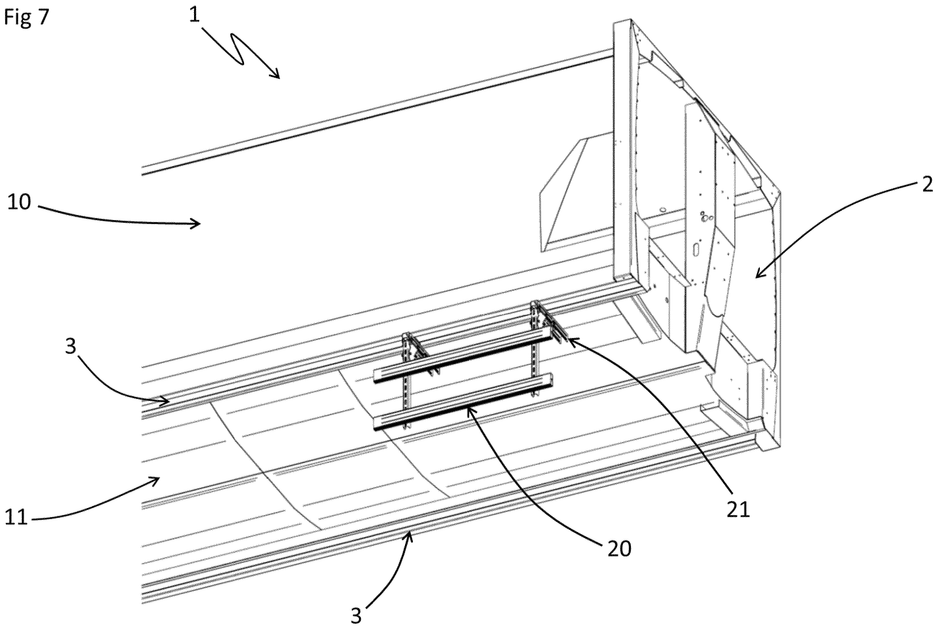

In Figur 7 ist erneut der aus Figur 1 bekannte Aufbau 1 gezeigt, diesmal ergänzt um einen Seitenaufprallschutz 20 als exemplarisches Anbauteil. Der Seitenaufprallschutz 20 wird über einen Träger 21 mit dem Anbindungselement 4 an dem Blechprofil 3 befestigt. Je nach Ausführung des Chassis auf dem der Aufbau 1 angeordnet ist und je nach Länge des Aufbaus 1 selbst, wird der Seitenaufprallschutz 21 an unterschiedlichen Positionen in Erstreckungsrichtung E angebracht. Mit dem erfindungsgemäßen Befestigungssystem kann die Position entlang des Blechprofils 3 frei gewählt werden und der Seitenaufprallschutz 21 einfach und effizient montiert werden.

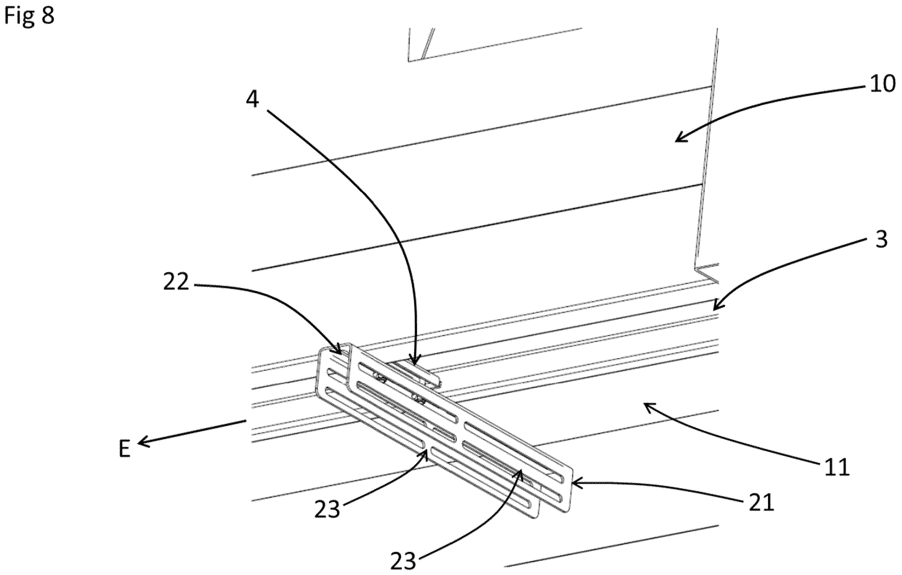

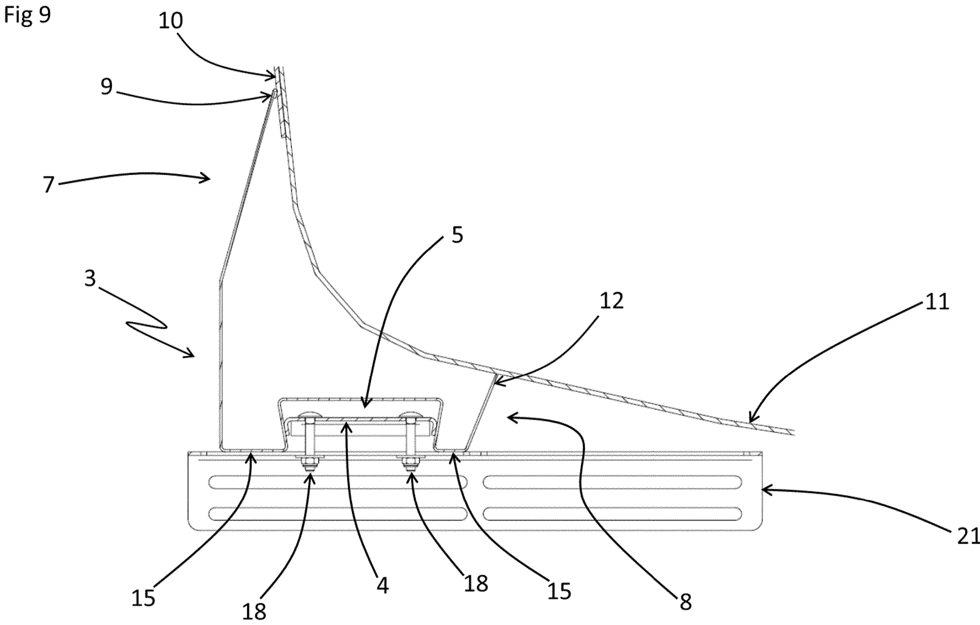

In den Figuren 8 und 9 ist dargestellt, wie der Träger 21 an dem Befestigungssystem angebracht ist. Der Träger 21 ist als U-Profil aus einem metallischen Material ausgebildet. In Rücken 22 und Schenkeln 23 des U-Profils sind Langlöcher zur schraubtechnischen Befestigung des Trägers 21 an dem Anbindungselement 4 sowie des eigentlichen Seitenaufprallschutzes 20 an dem Träger 21 vorgesehen.

Das Anbindungselement 4 ist in der Einbuchtung 5 an der gewünschten Position angeordnet und bereits mit Schrauben 18 versehen. Die Schrauben 18 werden durch die Langlöcher im Rücken 22 des Trägers 21 geführt und der Träger 21 an dem Anbindungselement 2 angeschraubt. Der Rücken 22 kommt dabei mit Anlageflächen 15 in Anlage, die neben der Öffnung 6 der Einbuchtung 5 ausgebildet sind. So kann eine stabile und dauerhafte Verbindung bereitgestellt werden.

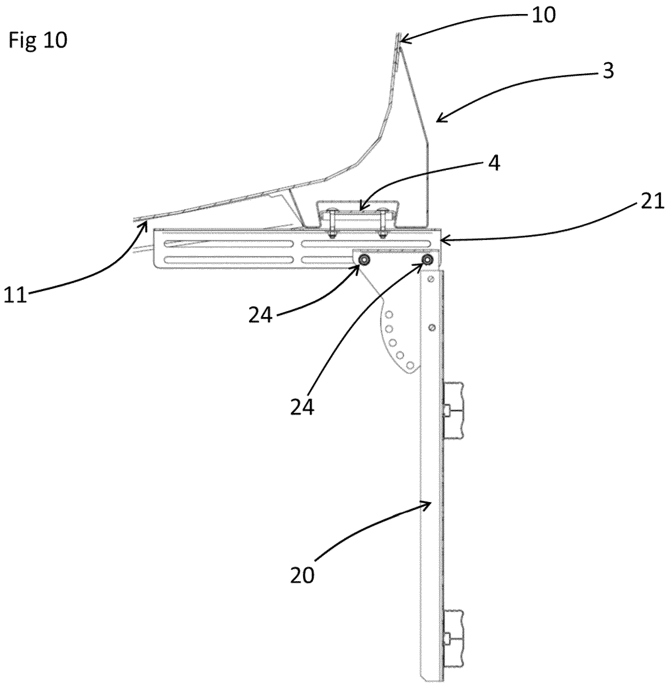

Das Seitenaufprallschutz 20 ist in Figur 10 in montiertem Zustand noch einmal mit Blickrichtung entgegen der Erstreckungsrichtung E dargestellt. Der Seitenaufprallschutz 20 ist mittels Schrauben 24, die durch Langlöcher in den Schenkeln 23 des Trägers 21 geführt sind, an diesem befestigt.

### Bezugszeichen

- 1: Aufbau
- 2: Einfüllöffnung
- 3: Blechprofil
- 4: Anbindungselement
- 5: Einbuchtung
- 6: Öffnung von 5
- 7: erster Abschnitt von 3
- 8: zweiter Abschnitt von 3
- 9: freies Ende von 7
- 10: Seitenwand von 1
- 11: Unterseite von 1
- 12: freies Ende von 8
- 13: Bodenfläche von 5
- 14: Seitenfläche von 5
- 15: Anlagefläche
- 16: Anbindungsabschnitt von 4
- 17: Schraubloch
- 18: Schraube
- 19: Seitenschwinge von 4
- 20: Seitenaufprallschutz
- 21: Träger
- 22: Rücken von 21
- 23: Schenkel von 22
- 24: Schraube
- B: Breite von 4
- E: Erstreckungsrichtung
- L: Abstand von 19
- α: Winkel

## Patentansprüche

1. Befestigungssystem zum Anbringen von Anbauteilen an einem Aufbau (1) eines Nutzfahrzeuges mit einem langgestreckten, einstückigen, materialeinheitlichen Blechprofil (3) mit einer in Erstreckungsrichtung verlaufenden Einbuchtung (5) und zumindest einem in der Einbuchtung (5) in Richtung einer Öffnung (6) der Einbuchtung (5) formschlüssig anbringbarem und in Erstreckungsrichtung verschieblichen Anbindungselement (4).

2. Befestigungssystem nach Anspruch 1 **dadurch gekennzeichnet, dass** das langgestreckte Blechprofil (3) mit seinen quer zur Erstreckungsrichtung E freien Enden (9,12) mit dem Aufbau (1) verbunden ist.

3. Befestigungssystem nach Anspruch 2 **dadurch gekennzeichnet, dass** das langgestreckte Blechprofil (3) einen ersten Abschnitt (7) aufweist, dessen freies Ende (9) mit einer Seitenwand (10) des Aufbaus (1) verbunden ist, und einen zweiten Abschnitt (8) aufweist, dessen freies Ende (12) mit einer Unterseite (11) des Aufbaus (1) verbunden ist, wobei die Einbuchtung (5) in dem zweiten Abschnitt (8) ausgebildet ist.

4. Befestigungssystem nach zumindest einem der vorstehenden Ansprüche **dadurch gekennzeichnet, dass** die Einbuchtung (5) einen im Wesentlichen trapezförmigen Querschnitt aufweist mit einer der Öffnung (6) gegenüberliegenden Bodenfläche (13) und zwei in Richtung der Öffnung (6) aufeinander zustrebenden Seitenflächen (14).

5. Befestigungssystem nach Anspruch 4 **dadurch gekennzeichnet, dass** in Einbaulage die Bodenfläche (13) im Wesentlichen zum Aufbau (1) weist und die Öffnung (6) im Wesentlichen zur Fahrzeugaufstandsfläche weist.

6. Befestigungssystem nach Anspruch 4 oder 5 **dadurch gekennzeichnet, dass** das Anbindungselement (4) einen Anbindungsabschnitt (16) mit zumindest einem Schraubloch (17) und zwei davon in einem Winkel α abstehende Seitenschwingen (19) aufweist, so dass die Seitenschwingen (19) im Bereich der Öffnung (6) mit den Seitenflächen (14) der Einbuchtung (5) in Anlage kommen, so dass das Anbindungselement (4) in Richtung der Öffnung (6) formschlüssig gehalten ist.

7. Befestigungssystem nach zumindest einem der Ansprüche 4 bis 6 **dadurch gekennzeichnet, dass** der Abstand der Seitenflächen (14) der Einbuchtung (5) im Bereich der Bodenfläche (13) größer ist als der Abstand L der Seitenschwingen (19) des Anbindungselements (4).

8. Befestigungssystem nach zumindest einem der vorstehenden Ansprüche **dadurch gekennzeichnet, dass** Anbauteile schraubtechnisch an dem Anbindungselement (4) anbringbar sind, wodurch das Anbindungselement (4) unverschieblich in dem langgestreckten Blechprofil (3) gehalten ist.

9. Befestigungssystem nach zumindest einem der vorstehenden Ansprüche **dadurch gekennzeichnet, dass** an dem langgestreckten Blechprofil (3) benachbart zu der Öffnung (6) der Einbuchtung (5) Anlageflächen (15) für Anbauteile ausgebildet sind.
